# EUROPEAN PATENT APPLICATION

(11) **EP 4 776 013 A1**
(43) Date of publication of application: **15.07.2026**
(21) Application number: 25227484.0
(22) Date of filing: 29.12.2025
(51) Int. Cl.: G01S 5/00, G01S 5/02, H04W 64/00, G01S 5/10

(54) **USER EQUIPMENT CONTROLLING MEASUREMENT TIMING AND OPERATING METHOD THEREOF**

(30) Priority: 31.12.2024 KR 20240202745; 24.02.2025 KR 20250023884
(71) Applicant: Samsung Electronics Co., Ltd., Suwon-si, Gyeonggi-do 16677 (KR)
(72) Inventor: LEE, Yejin, 16677 Suwon-si (KR); SO, Jungho, 16677 Suwon-si (KR)
(74) Representative: Marks & Clerk LLP

(57) **Abstract**

Provided are an operating method of a user equipment. The operating method comprises receiving, from a first base station, a positioning protocol (PP) message via signaling with the first base station, measuring, based on the PP message, a plurality of positioning reference signals (PRSs) comprising a first PRS of the first base station and a second PRS of a second base station and reporting, to the first base station, a result of the measuring of the plurality of PRSs. The measuring the plurality of PRSs comprises measuring, at a first timing, the first PRS and the second PRS. The second base station is a neighboring base station of the first base station. The first timing corresponds to a first time point at which the first PRS reaches the user equipment.

## Description

### BACKGROUND

### 1. Field

The present disclosure relates generally to wireless communications, and more specifically, to user equipment that performs an operation of estimating a location of the user equipment based on a positioning reference signal (PRS) and an operating method of the user equipment.

### 2. Description of Related Art

Several positioning technologies may have been standardized and/or promulgated to estimate the location of user equipment that may include, but not be limited to, time-based technologies (e.g., downlink-time difference of arrival (DL-TDoA)) and/or angle-based technologies (e.g., downlink-angle of departure (DL-AoD)).

For example, in DL-TDoA, a base station may estimate a location of user equipment based on a reference signal time difference (RSTD) that has been measured by the user equipment and reported to the base station. The RSTD may correspond to differences between arrival times of downlink-positioning reference signals (DL-PRSs) that may have been transmitted by base stations in different cells adjacent to the user equipment. When measuring a RSTD, a PRS of a base station that is relatively far from the user equipment may cause interference with other PRSs due to the difference in signal arrival timing with respect to the PRS of a base station performing wireless communication (e.g., serving cell). Consequently, the accuracy of an RSTD measurement may be negatively impacted by the interference.

Thus, there exists a need for further improvements in positioning technologies, as the need for accurate location estimation may be constrained by interference caused by far away base stations.

### SUMMARY

Example embodiments of the present disclosure provide a user equipment for eliminating interference caused by a serving cell and estimating a location of the user equipment by adjusting a measurement timing of a positioning reference signal (PRS), and an operating method of the user equipment.

According to an aspect of the present disclosure, an operating method of a user equipment includes: receiving, from a first base station, a positioning protocol (PP) message via signaling with the first base station, measuring, based on the PP message, a plurality of positioning reference signals (PRSs) including a first PRS of the first base station and a second PRS of a second base station, and reporting, to the first base station, a result of the measuring of the plurality of PRSs. The measuring of the plurality of PRSs includes measuring, at a first timing, the first PRS and the second PRS. The second base station is a neighboring base station of the first base station. The first timing corresponds to a first time point at which the first PRS reaches the user equipment.

According to an implementation, a second timing corresponds to a second time point at which the second PRS reaches the user equipment. According to an implementation, the first PRS and the second PRS are measured at the first timing in response to a difference value between the second timing and the first timing being less than a threshold value. According to an implementation, based on a difference value between the second timing and the first timing being greater than or equal to a threshold value, the first PRS is measured at the first timing, and the second PRS is measured at the second timing.

According to an implementation, the method further comprises, after reporting the result of the measuring, receiving a further positioning protocol (PP) message via signaling with the first base station, measuring, based on the further PP message, a further plurality of positioning reference signals (PRSs) including the third PRS of the first base station and a fourth PRS of the second base station, and reporting, to the first base station, a result of the measuring of the further plurality of PRSs. The measuring of the further plurality of PRSs may include measuring at a third timing the third PRS, and measuring at a fourth timing the fourth PRS, based on a difference value between the fourth timing and the third timing being greater than or equal to a threshold value, wherein the third timing corresponds to a third time point at which the third PRS reaches the user equipment and the fourth timing corresponds to a fourth time point at which the fourth PRS reaches the user equipment.

According to an aspect of the present disclosure, a user equipment includes a plurality of antennas configured to receive a PP message via signaling from a first base station, one or more communication processors including processing circuitry, and memory storing instructions. The instructions, when executed by the one or more communication processors individually or collectively, cause the user equipment to, based on operating in a first mode, measure, at a first timing, a first PRS of the first base station and a second PRS of a second base station, and generate and measurement result, and, based on operating in a second mode, measure the first PRS at the first timing and measure the second PRS at a second timing, and generate the measurement result. The second base station is a neighboring base station of the first base station. The first timing corresponds to a first time point at which the first PRS reaches the user equipment. The second timing corresponds to a second time point at which the second PRS reaches the user equipment.

According to an aspect of the present disclosure, a user equipment includes a plurality of antennas configured to receive a PP message via signaling from a first base station, one or more communication processors including processing circuitry, and memory storing instructions. The instructions, when executed by the one or more communication processors individually or collectively, cause the user equipment to measure, based on the PP message, a first PRS of the first base station and a second PRS of a second base station at a first timing corresponding to a first time point at which the first PRS reaches the user equipment, and generate a measurement result based on the first PRS and the second PRS. The second base station is a neighboring base station of the first base station.

Additional aspects may be set forth in part in the description which follows and, in part, may be apparent from the description, and/or may be learned by practice of the presented embodiments.

At least some of the above and other features of the invention are set out in the claims.

### BRIEF DESCRIPTION OF THE DRAWINGS

The above and other aspects, features, and advantages of certain embodiments of the present disclosure will be more apparent from the following detailed description taken in conjunction with the accompanying drawings, in which:
FIG. 1 is a block diagram illustrating a wireless communication system, according to an embodiment;
FIG. 2 is a diagram illustrating a positioning reference signal (PRS) measurement timing of a user equipment, according to an embodiment;
FIG. 3 is a flowchart illustrating an operating method of a user equipment, according to an embodiment;
FIG. 4 is a diagram illustrating a PRS measurement timing of a user equipment, according to an embodiment;
FIG. 5 is a flowchart illustrating an operating method of a wireless communication system, according to an embodiment;
FIG. 6 is a flowchart illustrating an operating method of a user equipment, according to an embodiment;
FIG. 7 is a block diagram illustrating a user equipment, according to an embodiment;
FIG. 8 is a flowchart illustrating an operating method of a user equipment, according to an embodiment;
FIG. 9 is a graph illustrating operation of a user equipment, according to an embodiment, and operation of a user equipment, according to a comparative example;
FIG. 10 is a block diagram illustrating an electronic device, according to an embodiment; and
FIG. 11 is a conceptual diagram illustrating an Internet of Things (IoT) network system to which an embodiment is applied.

### DETAILED DESCRIPTION

The following description with reference to the accompanying drawings is provided to assist in a comprehensive understanding of embodiments of the present disclosure defined by the claims and their equivalents. Various specific details are included to assist in understanding, but these details are considered to be examples only. Therefore, those of ordinary skill in the art may recognize that various changes and modifications of the embodiments described herein may be made without departing from the scope of the disclosure. In addition, descriptions of well-known functions and structures are omitted for clarity and conciseness.

With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wired), wirelessly, or via a third element.

Reference throughout the present disclosure to "one embodiment," "an embodiment," "an example embodiment," or similar language may indicate that a particular feature, structure, or characteristic described in connection with the indicated embodiment is included in at least one embodiment of the present solution. Thus, the phrases "in one embodiment", "in an embodiment," "in an example embodiment," and similar language throughout this disclosure may, but do not necessarily, all refer to the same embodiment. The embodiments described herein are example embodiments, and thus, the disclosure is not limited thereto and may be realized in various other forms.

It is to be understood that the specific order or hierarchy of blocks in the processes/flowcharts disclosed are an illustration of example approaches. Based upon design preferences, it is understood that the specific order or hierarchy of blocks in the processes/flowcharts may be rearranged. Further, some blocks may be combined or omitted. The accompanying claims present elements of the various blocks in a sample order, and are not meant to be limited to the specific order or hierarchy presented.

The embodiments herein may be described and illustrated in terms of blocks, as shown in the drawings, which carry out a described function or functions. These blocks, which may be referred to herein as units or modules or the like, or by names such as device, logic, circuit, controller, counter, comparator, generator, converter, or the like, may be physically implemented by analog and/or digital circuits including one or more of a logic gate, an integrated circuit, a microprocessor, a microcontroller, a memory circuit, a passive electronic component, an active electronic component, an optical component, and the like.

In the present disclosure, the articles "a" and "an" are intended to include one or more items, and may be used interchangeably with "one or more." Where only one item is intended, the term "one" or similar language is used. For example, the term "a processor" may refer to either a single processor or multiple processors. When a processor is described as carrying out an operation and the processor is referred to perform an additional operation, the multiple operations may be executed by either a single processor or any one or a combination of multiple processors.

Hereinafter, embodiments are described based on a wireless communication system (WCS) based on a Long Term Evolution (LTE) network, particularly, based on the 3rd Generation Partnership Project (3GPP). However, embodiments of the present disclosure are not limited to a new radio (NR) network, may also be applied to other wireless communication systems (e.g., cellular communication systems such as, but not limited to, NR, LTE-advanced (LTE-A), wireless broadband (WiBro), global system for mobile communication (GSM), sixth-generation (6G), or the like, and/or short-range communication systems such as, but not limited to, Bluetooth^{™}, near field communication (NFC), or the like) having a similar technical background and/or channel setting.

Alternatively or additionally, the various functions described below may be implemented and/or supported by artificial intelligence (AI) technology and/or one or more computer programs, each of which may be composed of computer-readable program code and/or implemented on a computer-readable medium. The terms "application" and "program" may refer to one or more computer programs, software components, sets of instructions, procedures, functions, objects, classes, instances, associated data, or portions thereof suitable for implementing suitable computer-readable program code. The term "computer readable program code" may include all types of computer code, including source code, object code, and executable code. The term "computer-readable media" may include any type of media that may be accessed by a computer, such as, but not limited to, read only memory (ROM), random access memory (RAM), a hard disk drive, a compact disc (CD), a digital video disc (DVD), or any other type of memory. A "non-transitory" computer-readable medium excludes wired, wireless, optical, or other communication links that transmit transitory electrical or other signals. Non-transitory computer-readable media includes media on which data may be stored permanently, and/or media on which data may be stored and later overwritten, such as, but not limited to, rewritable optical disks, erasable memory devices, or the like.

The embodiments described below illustrate a hardware approach as an example. However, the embodiments include techniques using both hardware and software, and thus, the embodiments do not exclude software-based approaches.

Hereinafter, various embodiments of the present disclosure are described with reference to the accompanying drawings.

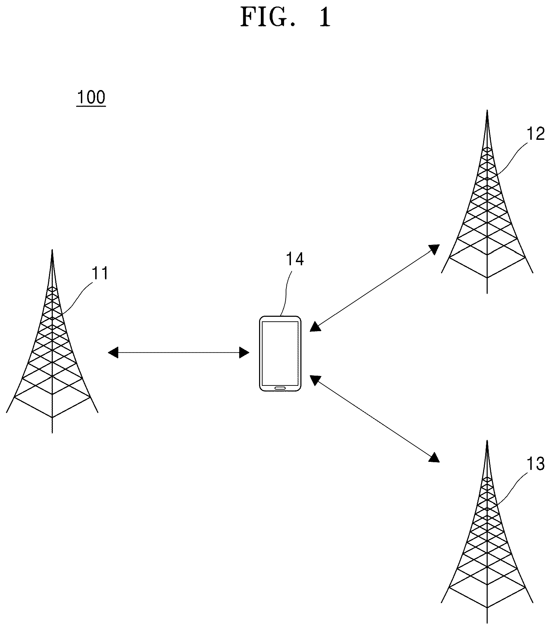

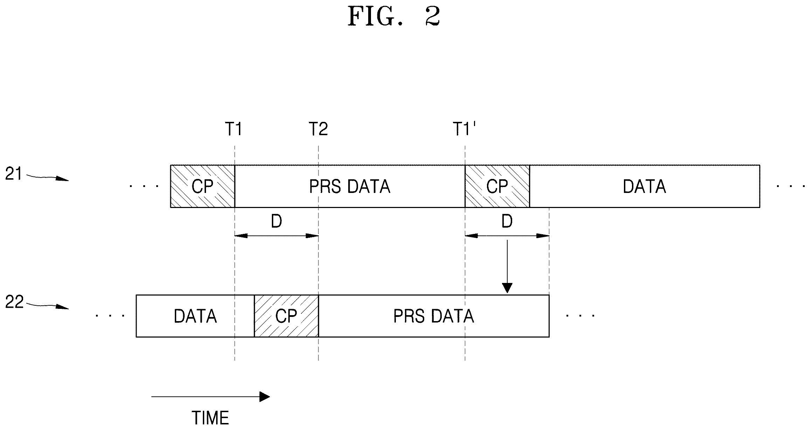

FIG. 1 is a block diagram illustrating a wireless communication system, according to an embodiment. FIG. 2 is a diagram illustrating a positioning reference signal (PRS) measurement timing of a user equipment, according to an embodiment.

Referring to FIG. 1, a wireless communication system 100 may include a plurality of base stations (e.g., a first base station 11, a second base station 12, and a third base station 13) and a user equipment 14. The plurality of base stations 11 to 13 may generally refer to fixed points that may communicate with the user equipment 14 and/or other base stations, and/or may refer to aerial base stations and/or mobile satellites (e.g., geostationary orbit (GEO) satellites, Low Earth Orbit (LEO) satellites, or the like) that may communicate with the user equipment 14 and/or other base stations. For example, the first base station 11 may support a non-terrestrial network and/or a terrestrial network.

The plurality of base stations 11 to 13 may exchange data and control information by communicating with the user equipment 14 and/or other base stations. As used herein, the plurality of base stations 11 to 13 may be referred to as a transmission and reception point (TRP), a cell, a Node B, an evolved-Node B (eNB), a next generation Node B (gNB), a sector, a site, a base transceiver system (BTS), an access point (AP), a relay node, a remote radio head (RRH), a radio unit (RU), a small cell, a device, or the like. The plurality of base stations 11 to 13 may provide wireless broadband access to the user equipment 14 within their coverage area.

The user equipment 14 may be fixed and/or mobile and may refer to any devices capable of communicating with the plurality of base stations 11 to 13 to transmit and/or receive data and/or control information. As used herein, the user equipment 14 may be referred to as a terminal, terminal equipment, mobile station (MS), mobile terminal (MT), a user terminal (UT), a subscribe station (SS), wireless communication device, wireless device, handheld device, or the like. Although FIG. 1 depicts one user equipment 14, embodiments of the present disclosure are not limited thereto. For example, other user equipment in addition to the user equipment 14 may be included in the wireless communication system 100.

The wireless communication system 100 may perform a positioning operation, which may be and/or may include an operation of estimating a location of the user equipment 14. For example, the wireless communication system 100 may perform a positioning operation using an observed time difference of arrival (OTDoA) technique. The OTDoA technique may refer to a technique of measuring the time it takes for a PRS sent simultaneously (e.g., at a substantially similar and/or the same time) from multiple base stations to reach the user equipment 14 and estimating a location of the user equipment 14 based on a reference signal time difference (RSTD), which may refer to a difference in the arrival timings of the PRS, by using geometric triangulation or a similar principle. A PRS may refer to a reference signal used to estimate a location of a user equipment. The user equipment 14 may receive a plurality of PRSs transmitted by base stations of adjacent different cells (e.g., first to third base stations 11 to 13) and measure RSTD based on the plurality of PRSs received. The user equipment 14 may receive a PRS through a resource block of a downlink subframe determined for PRS transmission. The user equipment 14 may transmit an RSTD to a location management function (LMF) (e.g., a location server), which means a network that estimates the location of the user equipment 14 within the wireless communication system 100, and the LMF (e.g., a location server) may estimate the location of the user equipment 14 based on the RSTD.

For example, the user equipment 14 may perform wireless communication with a first base station 11, and the wireless communication system 100 may perform a positioning operation using the OTDoA technique. The user equipment 14 may receive a PRS of each of the first base station 11 and a second base station 12. If a distance between the second base station 12 and the user equipment 14 is relatively greater than a distance between the first base station 11 and the user equipment 14, the time for the PRS of the second base station 12 to arrive at the user equipment 14 may be delayed, and interference may occur in the PRS of the second base station 12 due to a signal of the first base station 11 (e.g., a cell specific reference signal (CRS)).

For example, referring to FIG. 2, a first signal 21 may refer to a signal of the first base station 11, received by the user equipment 14, and a second signal 22 may refer to a signal of the second base station 12, received by the user equipment 14. The horizontal axis of the first signal 21 and the second signal 22 may represent time. Each of the first signal 21 and the second signal 22 may include cyclic prefix (CP), PRS data, and/or other signal data DATA (e.g., cell specific reference signal (CRS), physical downlink control channel (PDCCH), or the like) excluding the PRS data. If the distance between the second base station 12 and the user equipment 14 is relatively greater than the distance between the first base station 11 and the user equipment 14, PRS data of the second signal 22 may reach the user equipment 14 at a second timing T2 that is delayed by an interval D from a first timing T1, and interference may occur in the PRS data of the second signal 22 due to the CP of the first signal 21 or other signal data DATA by the delayed interval D.

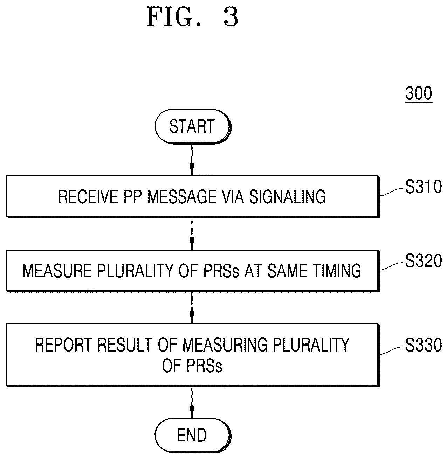

The wireless communication system 100 may not be able to measure accurate RSTD based on PRS due to interference of a signal of a serving cell and/or may not be able to estimate the accurate location of the user equipment 14. The wireless communication system 100, according to the present disclosure, may measure a plurality of PRSs at the same timing to reduce interference of signals of serving cells, and based on this, may measure a relatively accurate RSTD, thereby estimating the accurate location of the user equipment 14. Examples of measuring a plurality of PRSs at the same timing are described below with reference to FIGS. 3 to 11.

FIG. 3 is a flowchart illustrating an operating method of a user equipment, according to an embodiment. Referring to FIGS. 1 and 3, an operating method 300 of the user equipment 14 may include a plurality of operations S310 to S330.

In operation S310, the user equipment 14 may receive a positioning protocol (PP) message via signaling from a serving cell (e.g., the first base station 11). As used herein, signaling may refer to a protocol that may manage and/or control radio resources between the user equipment 14 and a serving cell (e.g., the first base station 11), and a PP message may refer to a message for supporting various location estimation techniques such as, but not limited to, OTDoA, enhanced cell ID (E-CID), or the like. The PP message may be generated by a location management function (e.g., by a location server) and provided to the serving cell for transmission to the user equipment 14. Although PP messages may be described as LTE positioning protocol (LPP) messages, embodiments of the present disclosure are not limited thereto. For example, a PP message may include an LPP message, a new radio positioning protocol A (NRPPa) message, a protocol message defined and/or promulgated by 3rd Generation Partnership Project (3GPP), or the like.

In some embodiments, the user equipment 14 may perform wireless communication with the first base station 11, the wireless communication may include signaling that may include Radio Resource Control (RRC) signaling, and the PP message may be inserted into a payload of the RRC message and transmitted to the user equipment 14.

In some embodiments, the PP message may include PRS information and cell information. For example, the PRS information may include at least one of a pattern of the PRS, a period of the PRS, or an offset of a subframe (or slot) in which the PRS is transmitted. As another example, the cell information may include at least one of a cell identifier (ID) of the base station or frequency information of the base station.

In some embodiments, a PP message may include auxiliary information. For example, the auxiliary information may include an expected RSTD, which may refer to an expected arrival timing difference between a PRS of a neighboring cell (e.g., the second base station 12) and a PRS of a serving cell (e.g., the first base station 11) with respect to the user equipment 14. A neighboring cell of another cell may be a cell that has a coverage area that overlaps the coverage area of the other cell. For instance, a neighboring cell may be a neighboring cell of a serving cell, wherein the neighboring cell and serving cell have overlapping coverage areas. The user equipment 14 may be located within the overlapping coverage areas. The expected RSTD may be determined (e.g., by the location management function (e.g., the location server)) based on an assumed or estimated location of the UE and based on known locations of the respective cells (base stations). As an example, an assumed location may be a predefined location (e.g., a center of the serving cell coverage area (e.g., the location of the serving cell)). As an example, an estimated location of the UE may be a location estimated by another (e.g., less precise) method, such as enhanced cell ID (E-CID), or an earlier estimated location.

In operation S320, the user equipment 14 may measure a plurality of PRSs at the same timing. The same timing may refer to a timing when the PRS of a serving cell (e.g., the first base station 11) performing wireless communication with the user equipment 14 among the plurality of PRSs reaches the user equipment 14. In some embodiments, the wireless communication system 100 may perform a positioning operation using the OTDoA technique, and the user equipment 14 may measure plurality of PRSs from a plurality of base stations including the first base station 11, the second base station 12, and a third base station 13 at the same timing based on the received PP message. In some embodiments, the user equipment 14 may calculate the same timing based on the received PP message.

Referring further to FIG. 2, for example, the same timing (otherwise known as the same time) may refer to the first timing T1 (otherwise known as the first time) at which the PRS of the first base station 11 reaches the user equipment 14, and the user equipment 14 may measure the PRS of the first base station 11 and the PRS of the second base station 12 in a period of time from the first timing T1 to a third timing T1' (otherwise known as a third time), the period of time corresponding to a PRS length of the first base station 11. For example, the user equipment 14 may calculate the first timing T1 based on PRS information included in the PP message (e.g., a PRS pattern of the first base station 11, a PRS period of the first base station 11, and/or a subframe offset at which the PRS of the first base station 11 is transmitted).

The distance between the second base station 12 and the user equipment 14 may be relatively longer than the distance between the first base station 11 and the user equipment 14, and when the PRS of the second base station 12 is measured based on the second timing T2 (otherwise known as a second time) at which the PRS of the second base station 12 reaches the user equipment 14, interference due to data DATA of the first signal 21 may occur, and the PRS measurement of the second base station 12 may be inaccurate due to the interference. Since the user equipment 14 of the present disclosure measures the PRS of the second base station 12 at the first timing T1 rather than the second timing T2, interference caused by the data DATA of the first signal 21 may be reduced, and the PRS measured based on the first timing T1 may be relatively more accurate than the PRS measured based on the second timing T2. Accordingly, the positioning operation performance of the wireless communication system 100, according to the present disclosure, may be improved.

As shown in FIG. 3, PRS measurement may refer to an operation in which the user equipment 14 receives a PRS and measures information necessary for estimating the location of the user equipment 14, based on the received PRS. For example, the user equipment 14 may receive a plurality of PRSs from a plurality of base stations including the first base station 11, the second base station 12, and the third base station 13 at the same timing, and measure a RSTD based on the plurality of PRSs received.

In operation S330, the user equipment 14 may report a measurement result of measuring the plurality of PRSs to a serving cell (e.g., the first base station 11). In some embodiments, the measurement result may refer to an RSTD measured based on the plurality of PRSs received by the user equipment 14, and the first base station 11 may transmit the received RSTD to a location server. The location server may estimate the location of the user equipment 14 based on the received RSTD by using triangulation and/or a similar principle.

In some embodiments, the measurement result may be an estimated location of the user equipment 14. For example, the user equipment 14 may measure the RSTD based on the received plurality of PRSs, and estimate the location of the user equipment 14 based on the measured RSTD using triangulation and/or a similar principle. The user equipment 14 may transmit the estimated location of the user equipment 14 to the first base station 11. The first base station 11 may transmit the received, estimated location of the user equipment 14 to the location server.

In some embodiments, the user equipment 14 may measure PRSs at the same timing. For example, the same timing may refer to the first timing T1 at which the PRS of the first base station 11 reaches the user equipment 14, and the user equipment 14 may measure the PRS of the first base station 11, the PRS of the second base station 12, and a PRS of the third base station 13 in a period of time from the first timing T1 to the third timing T1', the period of time corresponding to the PRS length of the first base station 11. Accordingly, measuring PRSs at the same timing may be measuring PRSs over a same time period. The same time period may be a time period during (e.g., over) which the first PRS is received by the user equipment 14.

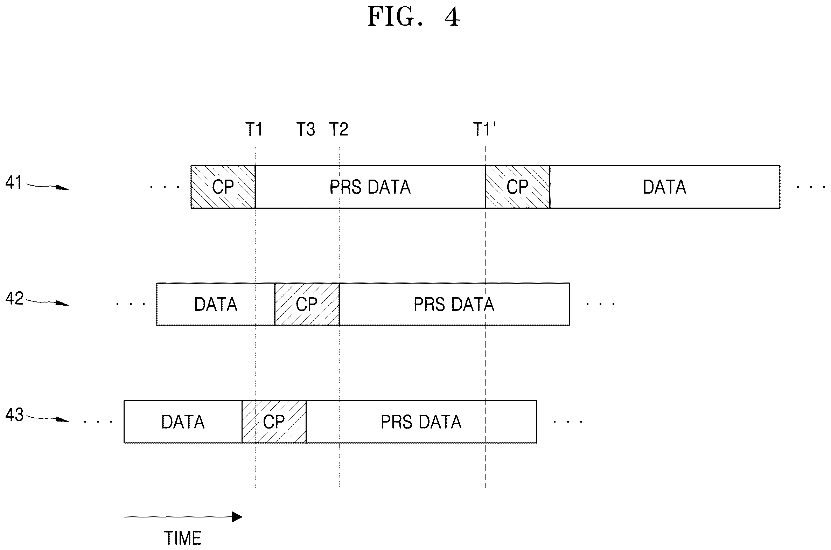

FIG. 4 is a diagram illustrating a PRS measurement timing of a user equipment, according to an embodiment.

A third signal 41 of FIG. 4 may include and/or may be similar in many respects to the first signal 21 described above with reference to FIG. 2, and may include additional features not mentioned above. Furthermore, a fourth signal 42 may include and/or may be similar in many respects to the second signal 22 described above with reference to FIG. 2, and may include additional features not mentioned above. Consequently, repeated descriptions of the third signal 41 and the fourth signal 42 described above with reference to FIG. 2 may be omitted for the sake of brevity.

Referring to FIG. 1 and FIG. 4, a fifth signal 43 may refer to a signal of the third base station 13, which may be received by the user equipment 14. The fifth signal 43 may include a cyclic prefix (CP), PRS data, and other signal data DATA (e.g., cell specific reference signal (CRS) and/or physical downlink control channel (PDCCH) (e.g., downlink control information (DCI))) excluding PRS data.

In some embodiments, a distance between the third base station 13 and the user equipment 14 may be greater than a distance between the first base station 11 and the user equipment 14, and may be less than the distance between the second base station 12 and the user equipment 14. For example, the PRS of the third base station 13 may reach the user equipment 14 at a fourth timing T3 (otherwise known as a fourth time).

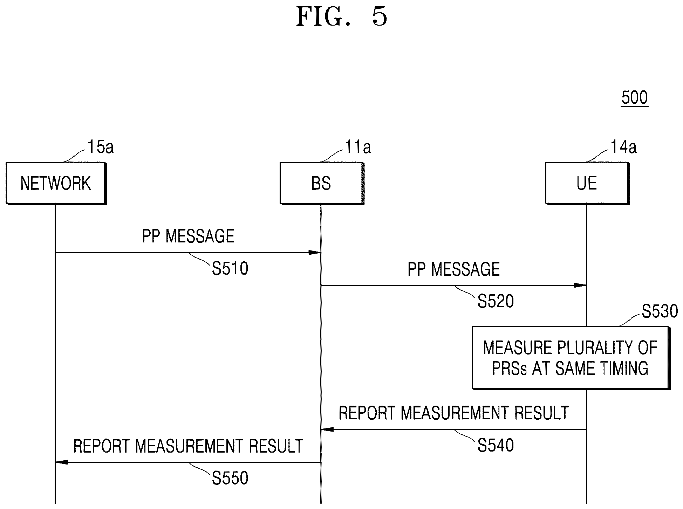

FIG. 5 is a flowchart illustrating an operating method of a wireless communication system, according to an embodiment. Referring to FIG. 5, an operating method 500 of a wireless communication system (e.g., the wireless communication system 100 of FIG. 1) may include a plurality of operations S510 to S550. A base station 11a may be an example of the first base station 11 of FIG. 1, and a user equipment 14a may be an example of the user equipment 14 of FIG. 1. Description of any details that overlap with those described with reference to FIG. 1 is omitted. A network 15a may refer to a location management function (LMF) (e.g., a location server).

A base station 11a of FIG. 5 may include and/or may be similar in many respects to the first base station 11 described above with reference to FIG. 1, and may include additional features not mentioned above. Furthermore, a user equipment 14a of FIG. 5 may include and/or may be similar in many respects to the user equipment 14 described above with reference to FIG. 1, and may include additional features not mentioned above. Consequently, repeated descriptions of the base station 11a and the user equipment 14a described above with reference to FIG. 1 may be omitted for the sake of brevity.

In operation S510, the network 15a may transmit a PP message to the base station 11a. As used herein, the network 15a may be and/or may include a location management function (LMF) (e.g., a location server). In some embodiments, the network 15a may generate information (e.g., a PP message) necessary to estimate the location of the user equipment 14a and transmit the generated information to the base station 11a.

In operation S520, the base station 11a may transmit a PP message received from the network 15a to the user equipment 14a via signaling. Operation S520 may include and/or may be similar in many respects to operation S310 of FIG. 3, may include additional features not mentioned above, and repeated descriptions of the operation S520 described above with reference to FIG. 3 may be omitted for the sake of brevity.

In operation S530, the user equipment 14a may measure a PRS based on the received PP message. In some embodiments, the user equipment 14a may measure PRSs of a plurality of base stations including the base station 11a and at least one base station adjacent to (e.g., neighboring) the base station 11a, based on the PP message. Operation S530 may include and/or may be similar in many respects to operation S320 of FIG. 3, may include additional features not mentioned above, and repeated descriptions of the operation S530 described above with reference to FIG. 3 may be omitted for the sake of brevity.

In operation S540, the user equipment 14a may report a measurement result to the base station 11a. In some embodiments, the measurement result may refer to an RSTD measured based on a plurality of PRSs received by the user equipment 14a. In some embodiments, the measurement result may refer to the location of the user equipment 14a estimated by triangulation and/or a similar principle, based on the RSTD measured by the user equipment 14a. For each PRS (other than the PRS of the serving cell (e.g., the first base station 11)), the RSTD may be the difference between the arrival time of the PRS and the arrival time of the PRS of the serving cell (e.g., the first base station 11)). Operation S540 may include and/or may be similar in many respects to operation S330 of FIG. 3, may include additional features not mentioned above, and repeated descriptions of the operation S540 described above with reference to FIG. 3 may be omitted for the sake of brevity.

In operation S550, the base station 11a may report the measurement result to the network 15a. In some embodiments, if the measurement result is a measured RSTD, the network 15a may estimate the location of the user equipment 14a based on the received RSTD by triangulation or a similar principle. In some embodiments, if the measurement result is the location of the user equipment 14a, the network 15a may store the measurement result.

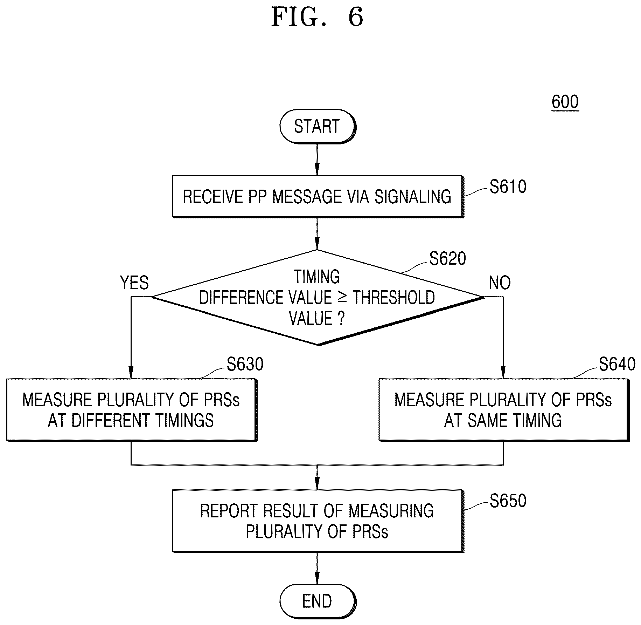

FIG. 6 is a flowchart illustrating an operating method of a user equipment, according to an embodiment. Referring to FIGS. 1 and 6, an operating method 600 of the user equipment 14 may include a plurality of operations S610 to S650.

Operation S610 may include and/or may be similar in many respects to operation S310 of FIG. 3, may include additional features not mentioned above, and repeated descriptions of the operation S160 described above with reference to FIG. 3 may be omitted for the sake of brevity.

In operation S620, the user equipment 14 may compare a time difference value with a threshold value. The time difference value may refer to a difference value between a PRS arrival timing of a base station (e.g., the second base station 12) that is farthest from the user equipment 14 among a plurality of base stations when the user equipment 14 receives a plurality of PRSs from the plurality of base stations and a PRS arrival timing of a serving cell (e.g., the first base station 11), and the threshold value may refer to a preset value. For example, the threshold value may include a value corresponding to half the value of one symbol.

In some embodiments, the user equipment 14 may calculate the time difference value based on the PP message received in operation S620. For example, the user equipment 14 may calculate a PRS arrival timing of a serving cell based on PRS information (e.g., the PRS pattern of the first base station 11, the PRS period of the first base station 11, and the subframe offset at which the PRS of the first base station 11 is transmitted) in the PP message. The user equipment 14 may calculate a PRS arrival timing of the second base station 12 that is the farthest from the user equipment 14 among the plurality of base stations, based on the expected RSTD in the PP message. The base station (e.g., neighboring base station) that is farthest from the user equipment 14 may be determined as the base station (e.g., neighboring base station) having the largest expected RSTD (from the PP message). The user equipment 14 may calculate a time difference value based on the calculated PRS arrival timing of the first base station 11 and the PRS arrival timing of the second base station 12. In one embodiment, the time difference value may be based on the expected RSTD for the second base station 12.

In some embodiments, the user equipment 14 may measure a plurality of PRSs at different timings in operation S630 if the timing difference value is greater than or equal to the threshold value (YES in operation S620). Different timings may refer to the timing at which each of the plurality of PRSs reaches the user equipment 14. The timing difference value may be determined based on the largest expected RSTD.

For example, as shown in FIG. 2, the user equipment 14 may measure the PRS of the first base station 11 at the first timing T1 when the PRS of the first base station 11 reaches the user equipment 14, and may measure the PRS of the second base station 12 at the second timing T2 when the PRS of the second base station 12 reaches the user equipment 14.

For example, the user equipment 14 may calculate the first timing T1 based on the PRS information included in the PP message (e.g., the PRS pattern of the first base station 11, the PRS period of the first base station 11, and the subframe offset at which the PRS of the first base station 11 is transmitted).

For example, the user equipment 14 may calculate the second timing T2 of the second base station 12 that is the farthest from the user equipment 14 among the plurality of base stations, based on the expected RSTD included in the PP message.

In some embodiments, the user equipment 14 may measure a plurality of PRSs at the same timing in operation S640 if the timing difference value is less than the threshold value (NO in operation S620). For example, referring further to FIG. 2, the same timing may refer to the first timing T1 at which the PRS of the first base station 11 reaches the user equipment 14, and the user equipment 14 may measure the PRS of the first base station 11 and the PRS of the second base station 12 in period of time from the first timing T1 to the third timing T1', the period of time corresponding to the PRS length of the first base station 11.

In operation S650, the user equipment 14 may report a result of measuring the plurality of PRSs to a serving cell (e.g., the first base station 11). Operation S650 may include and/or may be similar in many respects to operation S330 of FIG. 3, may include additional features not mentioned above, and repeated descriptions of the operation S650 described above with reference to FIG. 3 may be omitted for the sake of brevity.

If the time difference value (e.g., a value based on the expected RSTD for the neighboring cell that is farthest from the user equipment 14) is greater than the threshold (YES in operation S620), relatively more data other than the PRS may be included, and the influence of the other data included other than the PRS may be relatively stronger than the influence of interference. Since such interference may result in inaccurate PRS measurement, the user equipment 14 of the present disclosure may measure the PRS of the second base station 12 at the second timing T2 to potentially increase the accuracy of the PRS measurement.

When the time difference value (e.g., a value based on the expected RSTD for the neighboring cell that is farthest from the user equipment 14) is less than the threshold value (NO in operation S620), interference due to a serving cell (e.g., the first base station 11) may occur, and PRS measurement may be inaccurate due to the influence of the interference. Thus, the user equipment 14 of the present disclosure may measure the PRS of the second base station 12 at the first timing T1 rather than the second timing T2, which may reduce interference due to the data DATA of the first signal 21, and the PRS measured based on the first timing T1 may be relatively more accurate than the PRS measured based on the second timing T2. Accordingly, the positioning operation performance of the wireless communication system 100, according to the present disclosure, may be improved.

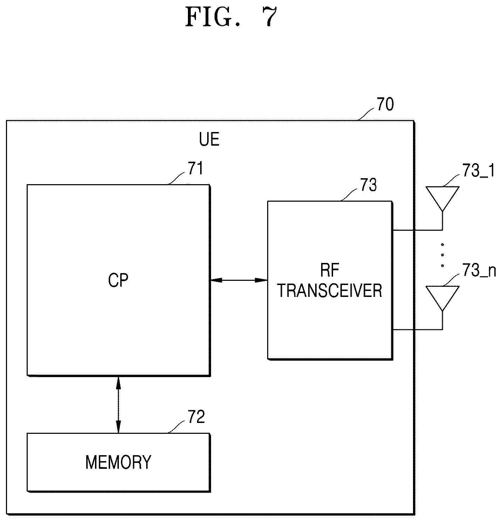

FIG. 7 is a block diagram illustrating a user equipment, according to an embodiment. A user equipment 70 of FIG. 7 may include and/or may be similar in many respects to the user equipment 14 described above with reference to FIG. 1, and may include additional features not mentioned above. Consequently, repeated descriptions of the user equipment 70 described above with reference to FIG. 1 may be omitted for the sake of brevity.

Referring to FIG. 7, the user equipment 70 may include a communication processor 71, a memory 72, a radio frequency (RF) transceiver 73, and a plurality of antennas (e.g., a first antenna 73_1 to an n-th antenna 73_n, where n is a positive integer greater than one (1)). The RF transceiver 73 may receive RF signals transmitted by a base station (e.g., the first base station 11 of FIG. 1) through the plurality of antennas 73_1 to 73_n. For example, the RF transceiver 73 may receive a PP message via signaling from the first base station 11 of FIG. 1. The RF transceiver 73 may down-convert the received RF signals to generate intermediate frequency (IF) and/or baseband signals. The RF transceiver 73 may up-convert the intermediate frequency and/or baseband signals output from the communication processor 71 to RF signals and transmit the same through the plurality of antennas 73_1 to 73_n.

The communication processor 71 may generate data signals by filtering, decoding and/or digitizing the intermediate frequency or baseband signals, and may receive data signals from the RF transceiver 73. The communication processor 71 may encode, multiplex, and/or analogize the received data signals. The communication processor 71 may additionally process data signals and execute programs and/or processes stored in the memory 72 to perform overall control operations for the user equipment 70.

In some embodiments, the communication processor 71 may be configured to measure a plurality of PRSs at the same timing based on a PP message received from the first base station 11 of FIG. 1 to generate a measurement result. For example, the communication processor 71 may measure the PRS of the first base station 11 of FIG. 1 and the PRS of the second base station 12 of FIG. 1 at a timing when the PRS of the first base station 11 of FIG. 1 reaches the user equipment 70 (e.g., the first timing T1 of FIG. 2), and generate a measurement result based on the measurement.

The memory 72 may have any structure for storing data. For example, the memory 72 may include a volatile memory device such as, but not limited to, a dynamic random-access memory (DRAM), a static random-access memory (SRAM), or the like, and/or a nonvolatile memory device such as, but not limited to, a flash memory, a resistive random-access memory (RRAM), or the like.

According to an embodiment, the memory 72 may store various data used by at least one component (e.g., the communication processor 71 or the RF transceiver 73) of user equipment 70. For example, the memory 72 may store various instructions executable through the communication processor 71. By way of example, the instructions may be executed by one or more communication processors 71 individually or collectively. Herein, the communication processor 71 may comprise, or be implemented as, processing circuitry. Furthermore, the processing circuitry may, for example, comprise at least one of an arithmetic logic unit (ALU), a plurality of registers, and an input/output (I/O) interface, configured to process the instructions.

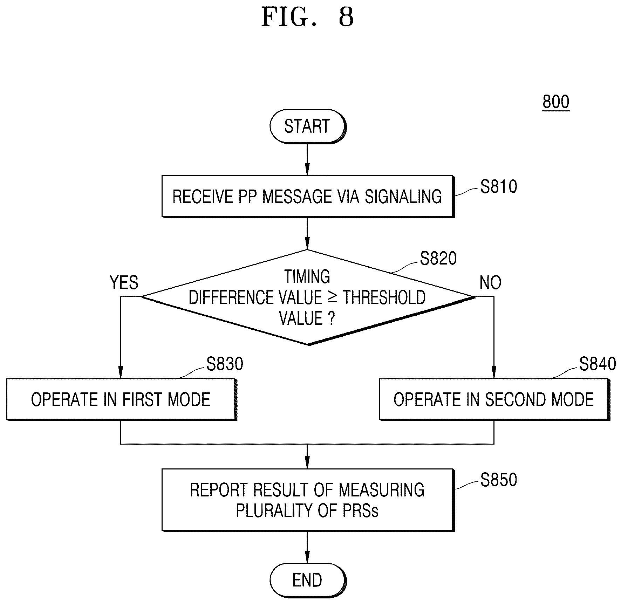

FIG. 8 is a flowchart illustrating an operating method of a user equipment, according to an embodiment. Referring to FIGS. 7 and 8, an operating method 800 of the user equipment 70 may include a plurality of operations S810 to S850.

Operation S810 of FIG. 8 may include and/or may be similar in many respects to the operation S610 described above with reference to FIG. 6, and may include additional features not mentioned above. Furthermore, operation S820 may include and/or may be similar in many respects to operation S620 described above with reference to FIG. 6, and may include additional features not mentioned above. Consequently, repeated descriptions of the operations S810 and S820 described above with reference to FIG. 6 may be omitted for the sake of brevity.

In some embodiments, the user equipment 70 may operate in a first mode in operation S830 when the time difference value is greater than or equal to the threshold value (YES in operation S820). The first mode may refer to a mode in which the user equipment 70 measures a plurality of PRSs at different timings. The different timings may refer to timings at which the plurality of PRSs have respectively reached the user equipment 70.

For example, referring further to FIG. 2, the user equipment 70 may measure the PRS of the first base station 11 at the first timing T1 when the PRS of the first base station 11 reaches the user equipment 70, and may measure the PRS of the second base station 12 at the second timing T2 when the PRS of the second base station 12 reaches the user equipment 70.

For example, the user equipment 70 may calculate the first timing T1 based on the PRS information included in the PP message (e.g., the PRS pattern of the first base station 11, the PRS period of the first base station 11, and the subframe offset at which the PRS of the first base station 11 is transmitted).

For example, the user equipment 70 may calculate the second timing T2 of the second base station 12 that is the farthest from the user equipment 70 among the plurality of base stations, based on the expected RSTD included in the PP message.

In some embodiments, the user equipment 70 may operate in a second mode in operation S840 if the time difference value is less than the threshold value (NO in operation S840). The second mode may refer to a mode in which the user equipment 70 measures a plurality of PRSs at the same timing. Referring further to FIG. 2, for example, the same timing may refer to the first timing T1 at which the PRS of the first base station 11 reaches the user equipment 70, and the user equipment 70 may measure the PRS of the first base station 11 and the PRS of the second base station 12 in a period of time from the first timing T1 to the third timing T1', the period of time corresponding to the PRS length of the first base station 11.

In operation S850, the user equipment 70 may report a result of measuring the plurality of PRSs to the first base station 11. Operation S850 may include and/or may be similar in many respects to operation S650 of FIG. 6, may include additional features not mentioned above, and repeated descriptions of the operation S850 described above with reference to FIG. 6 may be omitted for the sake of brevity.

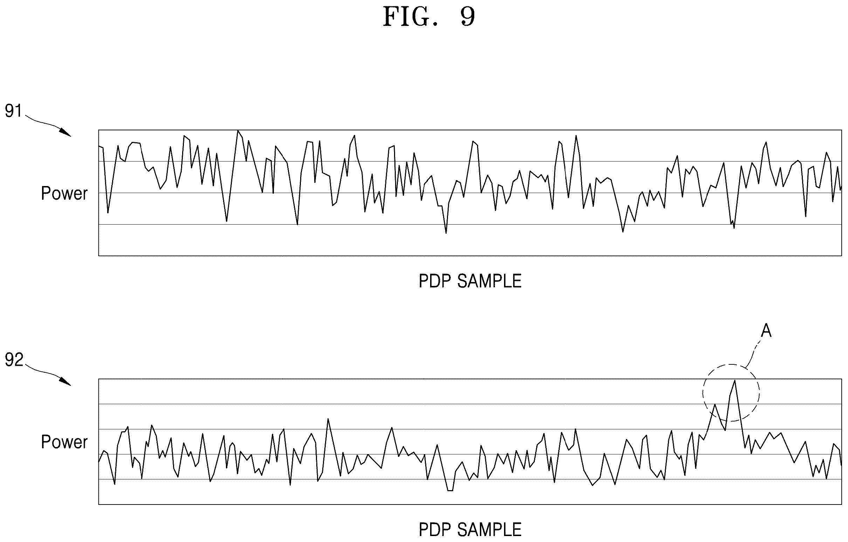

FIG. 9 is a graph illustrating operation of a user equipment, according to an embodiment, and operation of a user equipment, according to a comparative example.

Referring to FIG. 1 and FIG. 9, a first graph 91 may refer to a power delay profile (PDP) graph corresponding to a user equipment, according to the comparative example, and a second graph 92 may refer to a PDP graph corresponding to the user equipment 14. A PDP may refer to a graph that represents signal strength (or power) as a function of time delay. The horizontal axes of the first graph 91 and the second graph 92 may represent PDP samples (e.g., in units of teraseconds (Ts)) representing time units, and the vertical axes of the first graph 91 and the second graph 92 may represent power.

The user equipment, according to the comparative example, may measure a plurality of PRSs at different timings (e.g., at the arrival timings of respective PRSs). An operation of measuring a plurality of PRSs may refer to an operation of receiving a plurality of PRSs, calculating a channel impulse response (CIR) based on the received plurality of PRSs, calculating a PDP based on the calculated CIR, and detecting a PDP having power greater than a specific power among the calculated PDPs (e.g., detection a section of a PDP having power greater than the specific power). For example, the user equipment according to the comparative example may combine a received PRS pattern into a plurality of symbols and calculate each of the symbols as a PDP. When measuring a plurality of PRSs at different timings, interference due to ambient signals (e.g., signals from the first base station 11) may occur, and thus, may be difficult to detect PDPs having power exceeding a specific power due to noise in the calculated PDP.

The user equipment 14, according to the present disclosure, may measure a plurality of PRSs at the same timing (e.g., a timing when the PRS of the first base station 11 arrives). When measuring a plurality of PRSs at the same timing, interference caused by ambient signals (e.g., signals from the first base station 11) may be reduced, and noise may not occur (or may be reduced) in the calculated PDP. Accordingly, PDPs having power exceeding a certain power may be detected relatively easily. For example, unlike the first graph 91, from the second graph 92, a PDP having power greater than a certain power (e.g., a PDP corresponding to area A) may be detected.

Since the user equipment 14 of the present disclosure may measure a plurality of PRSs at the same timing rather than at different timings, interference caused by signals from a serving cell may be reduced, and the plurality of PRSs measured at the same timing may be relatively more accurate than the plurality of PRSs measured at different timings. Accordingly, the positioning operation performance of the wireless communication system 100, according to the present disclosure, may be improved.

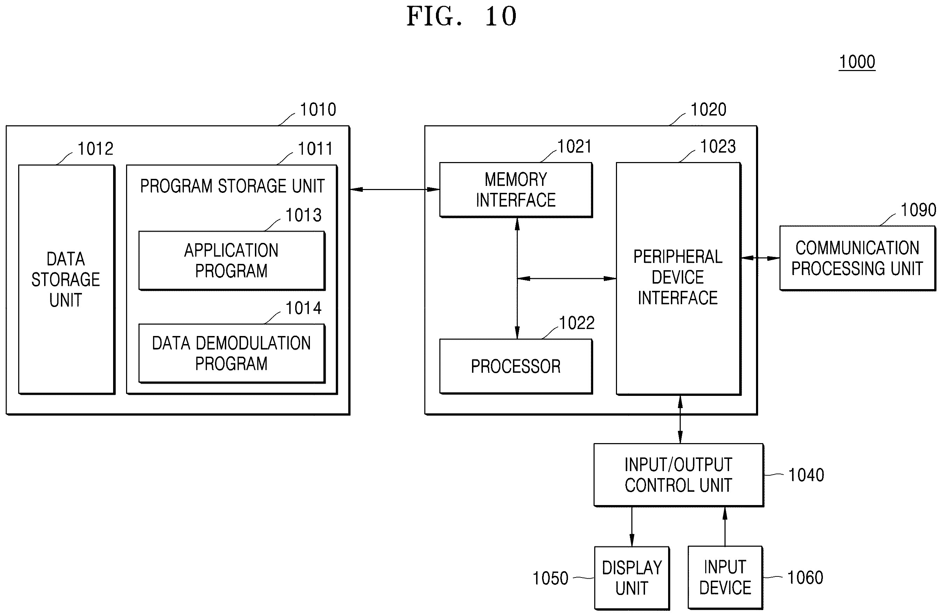

FIG. 10 is a block diagram illustrating an electronic device, according to an embodiment. Referring to FIG. 10, an electronic device 1000 may include, but is not limited to, a user equipment, according to an embodiment. For example, the electronic device 1000 may include and/or may be similar in many respects to the user equipment 14 of FIG. 1, and may include additional features not mentioned above. Consequently, repeated descriptions of the electronic device 1000 described above with reference to FIG. 1 may be omitted for the sake of brevity. As another example, the electronic device 1000 may be and/or may include a device that communicates with an external network (e.g., the first to third base stations 11 to 13 of FIG. 1 and/or an external server) and may include an autonomous vehicle, a robot, or the like.

As shown in FIG. 10, the electronic device 1000 may include a memory 1010, a processor unit 1020, an input/output control unit 1040, a display unit 1050, an input device 1060, and a communication processing unit 1090. In an embodiment, the memory 1010 may be and/or may include a plurality of memories 1010.

The memory 1010 may include a program storage unit 1011 that may store a program for controlling the operation of the electronic device 1000 and a data storage unit 1012 that stores data generated during program execution. The data storage unit 1012 may store data required for the operation of an application program 1013 and a data demodulation program 1014, and/or may store data generated from the operation of the application program 1013 and the data demodulation program 1014.

The program storage unit 1011 may include the application program 1013 and the data demodulation program 1014. As used herein, the program included in the program storage unit 1011 may be expressed as an instruction set and/or as a collection of instructions. The application program 1013 may include program codes for executing various applications operating on the electronic device 1000. That is, the application program 1013 may include codes (or commands) regarding various applications driven by the processor 1022.

The electronic device 1000 may include the communication processing unit 1090 that performs communication functions for voice communication and data communication. A peripheral device interface 1023 may control the connection between the input/output control unit 1040, the communication processing unit 1090, the processor 1022, and the memory interface 1021. The processor 1022 may control a plurality of base stations (e.g., the plurality of base stations 11 to 13) to provide a corresponding service using at least one software program. The processor 1022 may execute at least one program stored in the memory 1010 and provide a service corresponding to the program.

In some embodiments, the processor 1022 may be configured to measure a plurality of PRSs at the same timing based on a PP message received from the first base station 11 of FIG. 1 to generate a measurement result. For example, the processor 1022 may measure the PRS of the first base station 11 of FIG. 1 and the PRS of the second base station 12 of FIG. 1 at a timing when the PRS of the first base station 11 of FIG. 1 reaches the processor 1022 (e.g., the first timing T1 of FIG. 2), and generate a measurement result based on the measurement.

The input/output control unit 1040 may provide an interface between input/output devices such as, but not limited to, the display unit 1050 and the input device 1060 and the peripheral device interface 1023. The display unit 1050 may display status information, input characters, moving pictures, and/or still pictures. For example, the display unit 1050 may display application program information driven by the processor 1022.

The input device 1060 may provide input data generated by selection of an electronic device to the processor unit 1020 through the input/output control unit 1040. The input device 1060 may include a keypad including at least one hardware button and a touchpad that detects touch information. For example, the input device 1060 may provide touch information, such as, but not limited to, touch, touch movement, and touch release detected through the touch pad, to the processor 1022 through the input/output control unit 1040.

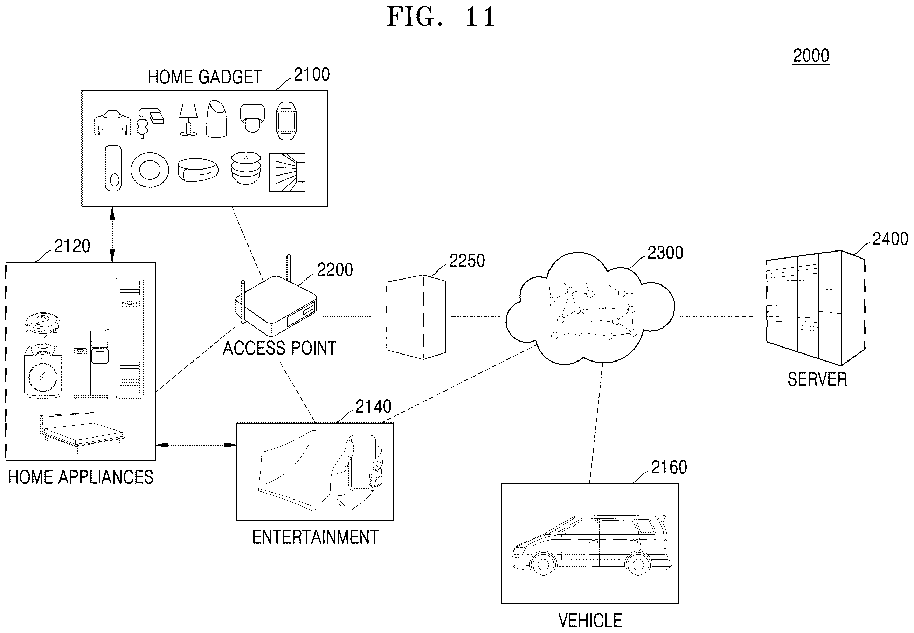

FIG. 11 is a conceptual diagram illustrating an Internet of Things (IoT) network system to which an embodiment is applied.

Referring to FIG. 11, an IoT network system 2000 may include a plurality of IoT devices (e.g., home gadgets 2100, home appliances/furniture 2120, entertainment devices 2140, and vehicles 2160), an access point 2200, a gateway 2250, a wireless network 2300, and a server 2400. As used herein, an IoT network may refer to a network between things using wired and/or wireless communication.

Each of the IoT devices (e.g., the home gadgets 2100, the home appliances/furniture 2120, the entertainment devices 2140, or the vehicles 2160) may form a group according to the characteristics of each IoT device. That is, the IoT devices may be grouped into a plurality of groups. For example, the plurality of groups may include a home gadget group 2100, a home appliances/furniture group 2120, an entertainment group 2140, or a vehicle group 2160. The plurality of IoT devices 2100 to 2140 may be connected to a communication network through the access point 2200 and/or to other IoT devices. The access point 2200 may be built into a single IoT device. The gateway 2250 may change a protocol to connect the access point 2200 to an external wireless network. The IoT devices 2100 to 2140 may be connected to an external communication network through the gateway 2250. The wireless network 2300 may be and/or may include the Internet and/or a public network. The plurality of IoT devices 2100 to 2160 may be connected to the server 2400 that may provide a certain service through the wireless network 2300, and a user may use a service through at least one of the plurality of IoT devices 2100 to 2160.

In some embodiments, the plurality of IoT devices 2100 to 2160 may be configured to measure the plurality of PRSs at the same timing based on the PP message received from the first base station 11 of FIG. 1 and generate a measurement result. For example, each of the plurality of IoT devices 2100 to 2160 may measure the PRS of the first base station 11 of FIG. 1 and the PRS of the second base station 12 of FIG. 1 at timings (e.g., the first timing T1 of FIG. 2) when the plurality of IoT devices 2100 to 2160 reach the plurality of IoT devices 2100 to 2160, respectively, and generate a measurement result based on the measurement.

While example embodiments of the present disclosure have been particularly shown and described, it is to be understood that various changes in form and details may be made therein without departing from the scope of the following claims.

## Claims

1. An operating method of a user equipment, the operating method comprising:
receiving (S310), from a first base station, a positioning protocol, PP, message via signaling with the first base station;
measuring (S320), based on the PP message, a plurality of positioning reference signals, PRSs, comprising a first PRS of the first base station and a second PRS of a second base station; and
reporting (S330), to the first base station, a result of the measuring of the plurality of PRSs,
wherein the measuring the plurality of PRSs comprises measuring, at a first timing, the first PRS and the second PRS,
wherein the second base station is a neighboring base station of the first base station, and
wherein the first timing corresponds to a first time point at which the first PRS reaches the user equipment.

2. The operating method of claim 1, wherein the PP message comprises PRS information and cell information,
wherein the PRS information comprises at least one of a pattern of the plurality of PRSs, a period of the plurality of PRSs, or a subframe offset at which the plurality of PRSs are transmitted, and
wherein the cell information comprises at least one of a cell identifier of the second base station or frequency information of the second base station.

3. The operating method of claim 2, wherein the measuring (S320) the plurality of PRSs further comprises:
determining the first timing based on the PRS information.

4. The operating method of claim 1, 2 or 3, wherein a second timing corresponds to a second time point at which the second PRS reaches the user equipment, and
wherein the measuring (S320) the plurality of PRSs further comprises:
based on a difference value between the second timing and the first timing being greater than or equal to a threshold value, measuring the first PRS at the first timing, and measuring the second PRS at the second timing.

5. The operating method of claim 4, wherein the PP message comprises an expected reference signal time difference, RSTD, indicating an expected arrival time difference between the first PRS and the second PRS of the second base station with respect to the user equipment, and
wherein the operating method further comprises determining the second timing based on the expected RSTD.

6. The operating method of claim 4 or claim 5, wherein the threshold value comprises a value corresponding to half of one symbol.

7. The operating method of any of claims 1 to 6, wherein the measuring (S320) of the plurality of PRSs further comprises measuring a third PRS of a third base station at the first timing, and
wherein the third base station is another neighboring base station of the first base station.

8. The operating method of any of claims 1 to 7, wherein the signaling comprises radio resource control, RRC, signaling, and
wherein the PP message is inserted as a payload of an RRC message.

9. The operating method of any of claims 1 to 8, wherein the reporting (S330) the result of the measuring of the plurality of PRSs comprises:
determining a location of the user equipment based on the result of the measuring; and
reporting, to the first base station, the location of the user equipment.

10. The operating method of any of claims 1 to 9, wherein the measuring (S320) of the first PRS and the second PRS comprises:
measuring a reference signal time difference, RSTD, based on the first PRS and the second PRS of the second base station received at the first timing.

11. A user equipment comprising:
a plurality of antennas (73_1, 73_n) configured to receive (S610) a positioning protocol, PP, message via signaling from a first base station;
one or more communication processors (71) comprising processing circuitry; and
memory (72) storing instructions,
wherein the instructions, when executed by the one or more communication processors (71) individually or collectively, cause the user equipment to:
based on operating in a first mode, measure (S640), at a first timing, a first positioning reference signal, PRS, of the first base station and a second PRS of a second base station, and generate a measurement result; and
based on operating in a second mode, measure (S630) the first PRS at the first timing and measure the second PRS at a second timing, and generate a measurement result,
wherein the second base station is a neighboring base station of the first base station,
wherein the first timing corresponds to a first time point at which the first PRS reaches the user equipment, and
wherein the second timing corresponds to a second time point at which the second PRS reaches the user equipment.

12. The user equipment of claim 11, wherein the instructions, when executed by the one or more communication processors (71) individually or collectively, further cause the user equipment to:
based on a difference value between the second timing and the first timing being less than a threshold value, operate in the first mode, and
based on the difference value being greater than or equal to the threshold value, operate in the second mode.

13. The user equipment of claim 12, wherein the PP message comprises an expected reference signal time difference, RSTD, indicating an expected arrival timing difference between the first PRS and the second PRS of the second base station with respect to the user equipment, and
wherein the instructions, when executed by the one or more communication processors (71) individually or collectively, further cause the user equipment to:
determine the second timing based on the expected RSTD.

14. The user equipment of claim 11, 12 or 13, wherein the PP message comprises PRS information and cell information,
wherein the PRS information comprises at least one of a pattern of a plurality of PRSs, a period of the plurality of PRSs, or a subframe offset at which the plurality of PRSs are transmitted, and
wherein the cell information comprises at least one of a cell identifier of the second base station or frequency information of the second base station.

15. The user equipment of claim 14, wherein the instructions, when executed by the one or more communication processors (71) individually or collectively, further cause the user equipment to:
determine the first timing based on the PRS information.
